# EUROPEAN PATENT APPLICATION

(11) **EP 4 122 882 A1**
(43) Date of publication of application: **25.01.2023**
(21) Application number: 21771000.3
(22) Date of filing: 16.03.2021
(51) Int. Cl.: C01B 25/45, H01M 4/13, H01M 4/62, H01M 10/052, H01M 10/0562, H01B 1/06, H01B 1/08

(54) **SOLID-STATE BATTERY**

(30) Priority: 17.03.2020 JP 2020046248
(71) Applicant: Murata Manufacturing Co., Ltd., Nagaokakyo-shi, Kyoto 617-8555 (JP)
(72) Inventor: YOSHIOKA, Makoto, Nagaokakyo-shi, Kyoto 617-8555 (JP); TAKANO, Ryohei, Nagaokakyo-shi, Kyoto 617-8555 (JP)
(74) Representative: Reeve, Nicholas Edward
(86) International application number: PCT/JP2021/010672
(87) International publication number: WO 2021/187494

(57) **Abstract**

In one embodiment of the present invention, a solid state battery is provided. The solid state battery includes, along a stacking direction, at least one battery constituent unit including a positive electrode layer, a negative electrode layer, and a solid electrolyte layer interposed between the positive electrode layer and the negative electrode layer, in which at least the solid electrolyte layer includes solid electrolyte particles including a portion in which a constituent ratio of a transition metal element to all metal elements (excluding lithium) is 0.0% or more and 15% or less.

## Description

### TECHNICAL FIELD

The present invention relates to a solid state battery.

### BACKGROUND ART

Conventionally, a secondary battery that can be repeatedly charged and discharged has been used for various applications. For example, secondary batteries are used as power sources of electronic devices such as smart phones and notebook computers.

In the secondary batteries, liquid electrolytes (electrolytic solutions) such as organic solvents have been conventionally used as media for moving ions. However, in a secondary battery using an electrolytic solution, there is a problem such as leakage of the electrolytic solution. Thus, development of a solid state battery including a solid electrolyte instead of a liquid electrolyte has been proceeding.

### PRIOR ART DOCUMENT

### PATENT DOCUMENT

Patent Document 1: Japanese Patent Application Laid-Open No. 2007-5279

### SUMMARY OF THE INVENTION

### Problem to be solved by the invention

The solid state battery may have a configuration including, along a stacking direction, at least one battery constituent unit generally including a positive electrode layer, a negative electrode layer, and a solid electrolyte layer interposed between the positive electrode layer and the negative electrode layer. In such a configuration, at least the solid electrolyte layer contains solid electrolyte particles, and the solid electrolyte particles may contain a transition metal element as one of constituent elements thereof. Here, when charge and discharge are performed under a condition that a ratio of the transition metal element in the solid electrolyte particles is relatively large, the following problems may occur.

Specifically, the transition metal element is generally affected by a potential change of the positive electrode/negative electrode during charging and discharging. Thus, when the solid electrolyte particles are affected by the potential change of the positive electrode/negative electrode during charging and discharging, the transition metal elements may react (oxidation-reduction reaction) attributed to a large amount of transition metal elements contained in the solid electrolyte particles. As a result, in the solid electrolyte layer located between the positive electrode layer and the negative electrode layer, a predetermined ion conduction path may be inhibited, and ion conductivity may be lowered. In addition, due to the reaction (oxidation-reduction reaction) of the transition metal element, there is a possibility that the electron conduction path is continued through the reacted transition metal in the solid electrolyte layer located between the positive electrode layer and the negative electrode layer. In particular, when the electron conduction path is continued in the solid electrolyte layer located between the positive electrode layer and the negative electrode layer, a short circuit may occur between the positive electrode and the negative electrode due to this. The occurrence of such a short circuit may result in deterioration of the characteristics of the solid state battery.

The present invention has been made in view of the above circumstances. That is, an object of the present invention is to provide a solid state battery capable of suitably suppressing deterioration of battery characteristics.

### Means for solving the problem

In order to achieve the above object, according to an embodiment of the present invention, there is provided a solid state battery including, along a stacking direction, at least one battery constituent unit including a positive electrode layer, a negative electrode layer, and a solid electrolyte layer interposed between the positive electrode layer and the negative electrode layer, in which at least the solid electrolyte layer includes solid electrolyte particles including a portion in which a constituent ratio of a transition metal element to all metal elements (excluding lithium) is 0.0% or more and 15% or less.

### Advantageous effect of the invention

According to an embodiment of the present invention, deterioration of battery characteristics can be suitably suppressed.

### BRIEF EXPLANATION OF DRAWINGS

FIG. 1 is a sectional view schematically showing a solid electrolyte layer located between electrodes of a solid state battery according to one embodiment of the present invention.
FIG. 2 is a sectional view schematically showing the solid electrolyte layer located between the electrodes of the solid state battery according to one embodiment of the present invention.
FIG. 3 is a sectional view schematically showing the solid electrolyte layer located between the electrodes of the solid state battery according to one embodiment of the present invention.

### MODE FOR CARRYING OUT THE INVENTION

Prior to describing a solid state battery according to an embodiment of the present invention, a basic configuration of the solid state battery will be described. The term "solid state battery" used in the present specification refers to, in a broad sense, a battery whose constituent elements are composed of solid and refers to, in a narrow sense, all solid state battery whose constituent elements (particularly all constituent elements) are composed of solid. In a preferred embodiment, the solid state battery in the present invention is a stacked solid state battery configured such that layers constituting a battery constituent unit are stacked with each other, and preferably such layers are composed of a sintered body. The "solid state battery" used herein can include not only a secondary battery capable of repeating charging and discharging, but also a primary battery capable of only discharging. In a preferred embodiment of the present invention, the solid state battery is a secondary battery. The "secondary battery" is not excessively limited by its name, and can include, for example, a power storage device.

The term "sectional view" used here refers to a state when the solid state battery is viewed from a direction substantially perpendicular to a thickness direction based on a stacking direction of an electrode material constituting the solid state battery. The terms "vertical direction" and "horizontal direction" directly or indirectly used here correspond respectively to the vertical direction and the horizontal direction in the drawing. Unless otherwise stated, the same numerals and symbols denote the same members or portions or the same contents. In a preferred embodiment, it can be grasped that a vertical downward direction (that is, a direction in which gravity acts) corresponds to a "downward direction", and the opposite direction corresponds to an "upward direction".

Hereinafter, the "solid state battery" of the present invention will be described in detail. Although description will be made with reference to the drawings as necessary, illustrated contents are schematically and exemplarily shown wherein their appearances, their dimensional proportions and the like are not necessarily real ones, and are merely for the purpose of making it easy to understand the present invention.

The term "solid state battery" used in the present invention refers to, in a broad sense, a battery whose constituent elements are composed of solid and refers to, in a narrow sense, all solid state battery whose battery constituent elements (particularly preferably all battery constituent elements) are composed of solid. In a preferred embodiment, the solid state battery in the present invention is a stacked solid state battery configured such that layers constituting a battery constituent unit are stacked with each other, and preferably such layers are composed of a sintered body. The "solid state battery" includes not only a so-called "secondary battery" capable of repeating charging and discharging, but also a "primary battery" capable of only discharging. According to a preferred embodiment of the present invention, the "solid state battery" is a secondary battery. The "secondary battery" is not excessively limited by its name, and can include, for example, an electric storage device.

The term "planar view" used here is based on a form where an object is viewed from above or below along a thickness direction based on a stacking direction of layers constituting the solid state battery. The term "sectional view" used here is based on a form when viewed from a direction substantially perpendicular to the thickness direction based on the stacking direction of layers constituting the solid state battery (to put it briefly, a form when taken along a plane parallel to the thickness direction). The terms "vertical direction" and "horizontal direction" directly or indirectly used here correspond respectively to the vertical direction and the horizontal direction in the drawing. Unless otherwise stated, the same numerals and symbols denote the same members or portions or the same contents. In a preferred embodiment, it can be grasped that a vertical downward direction (that is, a direction in which gravity acts) corresponds to a "downward direction", and the opposite direction corresponds to an "upward direction".

Unless otherwise described, various numerical ranges mentioned herein are intended to include the very numerical values of the lower and upper limits. Specifically, for example, taking a numerical range "1 to 10" as an example, unless otherwise described, it is interpreted that the numerical range includes the lower limit "1" and also includes the upper limit "10".

### [Configuration of Solid State Battery]

The solid state battery includes at least positive and negative electrode layers and a solid electrolyte. Specifically, the solid state battery includes a battery element that includes a battery constituent unit including a positive electrode layer, a negative electrode layer, and a solid electrolyte interposed between the positive electrode layer and the negative electrode layer.

In the solid state battery, each layer constituting the solid state battery may be formed by firing, and the positive electrode layer, the negative electrode layer, the solid electrolyte, and the like form a sintered layer. Preferably, the positive electrode layer, the negative electrode layer, and the solid electrolyte are fired integrally with each other, and therefore the battery element forms an integrally sintered body.

The positive electrode layer is an electrode layer containing at least a positive electrode active material. The positive electrode layer can further contain a solid electrolyte. For example, the positive electrode layer includes a sintered body containing at least positive electrode active material particles and solid electrolyte particles. In one preferred aspect, the positive electrode layer includes a sintered body containing substantially only positive electrode active material particles and solid electrolyte particles. On the other hand, the negative electrode layer is an electrode layer containing at least a negative electrode active material. The negative electrode layer can further contain a solid electrolyte. For example, the negative electrode layer includes a sintered body containing at least negative electrode active material particles and solid electrolyte particles. In one preferred aspect, the negative electrode layer includes a sintered body containing substantially only negative electrode active material particles and solid electrolyte particles.

The positive electrode active material and the negative electrode active material are substances involved in transfer of electrons in the solid state battery. Ions move (are conducted) between the positive electrode layer and the negative electrode layer with the solid electrolyte therebetween to transfer electrons, so that the solid state battery is charged and discharged. The positive electrode layer and the negative electrode layer are particularly preferably layers capable of inserting and extracting lithium ions or sodium ions. That is, the solid state battery is preferably an all-solid-state secondary battery in which lithium ions move between the positive electrode layer and the negative electrode layer with the solid electrolyte interposed between the layers, thereby charging and discharging the battery.

### (Positive Electrode Active Material)

Examples of the positive electrode active material contained in the positive electrode layer include at least one selected from the group consisting of a lithium-containing phosphate compound having a NASICON-type structure, a lithium-containing phosphate compound having an olivine-type structure, a lithium-containing layered oxide, and a lithium-containing oxide having a spinel-type structure. As an example of the lithium-containing phosphate compound having a NASICON-type structure, Li₃V₂(PO₄)₃ can be mentioned. As an example of the lithium-containing phosphate compound having an olivine-type structure, LiFePO₄, LiMnPO₄, and the like can be mentioned. As an example of the lithium-containing layered oxide, LiCoO₂, LiCo_{1/3}Ni_{1/3}Mn_{1/3}O₂, and the like can be mentioned. As an example of the lithium-containing oxide having a spinel-type structure, LiMn₂O₄, LiNi_{0.5}Mn_{1.5}O₄, and the like can be mentioned.

Examples of the positive electrode active material capable of inserting and extracting sodium ions include at least one selected from the group consisting of a sodium-containing phosphate compound having a NASICON-type structure, a sodium-containing phosphate compound having an olivine-type structure, a sodium-containing layered oxide, a sodium-containing oxide having a spinel-type structure and the like.

### (Negative Electrode Active Material)

Examples of the negative electrode active material contained in the negative electrode layer include at least one selected from the group consisting of an oxide containing at least one element selected from the group consisting of Ti, Si, Sn, Cr, Fe, Nb, and Mo, a graphite-lithium compound, a lithium alloy, a lithium-containing phosphate compound having a NASICON-type structure, a lithium-containing phosphate compound having an olivine-type structure, and a lithium-containing oxide having a spinel-type structure. As an example of the lithium alloy, Li-Al alloys and the like can be mentioned. As an example of the lithium-containing phosphate compound having a NASICON-type structure, Li₃V₂(PO₄)₃, LiTi₂(PO₄)₃, and the like can be mentioned. As an example of the lithium-containing phosphate compound having an olivine-type structure, LiCuPO₄ and the like can be mentioned. As an example of the lithium-containing oxide having a spinel-type structure, Li₄Ti₅O₁₂ and the like can be mentioned.

Examples of the negative electrode active material capable of inserting and extracting sodium ions include at least one selected from the group consisting of a sodium-containing phosphate compound having a NASICON-type structure, a sodium-containing oxide having a spinel-type structure and the like.

In the solid state battery of the present invention in one preferred aspect, the positive electrode layer and the negative electrode layer are made of the same material.

The positive electrode layer and/or the negative electrode layer can contain a conductive aid. The conductive aid contained in the positive electrode layer and the negative electrode layer may be at least one agent that contains a metal material such as silver, palladium, gold, platinum, aluminum, copper, or nickel, carbon, and the like.

In addition, the positive electrode layer and/or the negative electrode layer can contain a sintering aid. Examples of the sintering aid include at least one selected from the group consisting of lithium oxide, sodium oxide, potassium oxide, boron oxide, silicon oxide, bismuth oxide, and phosphorus oxide.

### (Solid Electrolyte)

The solid electrolyte is a material capable of conducting lithium ions. In particular, the solid electrolyte constituting the battery constituent unit in the solid state battery forms a layer through which lithium ions or sodium ions can conduct between the positive electrode layer and the negative electrode layer. The solid electrolyte may be provided at least between the positive electrode layer and the negative electrode layer. That is, the solid electrolyte may exist around the positive electrode layer and/or the negative electrode layer so as to protrude from between the positive electrode layer and the negative electrode layer. Specific examples of the solid electrolyte include a lithium-containing phosphate compound having a NASICON structure, an oxide having a perovskite structure, and an oxide having a garnet-type structure or a structure similar to the garnet-type structure. Examples of the lithium-containing phosphate acid compound having a NASICON structure include LiₓM_{y}(PO₄)₃ (1≤x≤2, 1≤y≤2, M is at least one selected from the group consisting of Ti, Ge, Al, Ga and Zr). As an example of the lithium-containing phosphate compound having a NASICON structure, Li_{1.2}Al_{0.2}Ti_{1.8}(PO₄)₃ and the like can be mentioned, for example. As an example of the oxide having a perovskite structure, La_{0.55}Li_{0.55}TiO₃ and the like can be mentioned. As an example of the oxide having a garnet-type structure or a structure similar to the garnet-type structure, Li₇La₃Zr₂O₁₂ and the like can be mentioned.

Examples of the solid electrolyte material capable of conducting sodium ions include a sodium-containing phosphate compound having a NASICON structure, an oxide having a perovskite structure, and an oxide having a garnet-type structure or a structure similar to the garnet-type structure. Examples of the sodium-containing phosphate compound having a NASICON structure include NaₓM_{y}(PO₄)₃ (1≤x≤2, 1≤y≤2, M is at least one selected from the group consisting of Ti, Ge, Al, Ga and Zr).

The solid electrolyte can contain a sintering aid. The sintering aid contained in the solid electrolyte can be selected from, for example, a material similar to the sintering aid that can be contained in the positive electrode layer/the negative electrode layer

### (Terminal)

Solid state batteries are generally provided with terminals (for example, external electrodes). Terminals are provided, in particular, on side portions of solid state batteries. Specifically, a terminal on the positive electrode side connected to the positive electrode layer and a terminal on the negative electrode side connected to the negative electrode layer are provided on the side portions of the solid state battery. The terminal of the positive electrode layer is joined to an end portion of the positive electrode layer, specifically, an extended portion formed at the end portion of the positive electrode layer. The terminal of the negative electrode layer is joined to an end portion of the negative electrode layer, specifically, an extended portion formed at the end portion of the negative electrode layer. In one preferred aspect, the terminal preferably contains glass or glass ceramics from the viewpoint of being joined to the extended portion of the electrode layer. Furthermore, the terminal preferably contains a material having high conductivity. Although not particularly limited, specific examples of the material of the terminal include at least one selected from the group consisting of silver, gold, platinum, aluminum, copper, tin, and nickel.

### (Protective Layer)

A protective layer can be generally formed on an outermost side of the solid state battery, and used to electrically, physically, and/or chemically protect. As a material forming the protective layer, preferred is a material that is excellent in insulation property, durability and/or moisture resistance, and is environmentally safe.

The protective layer is a layer that covers a surface of the battery element so that the extended portion of each electrode layer and each external electrode can be joined to each other. Specifically, the protective layer covers the surface of the battery element so that the extended portion of the positive electrode layer and the external electrode on the positive electrode side can be joined, and covers the surface of the battery element so that the extended portion of the negative electrode layer and the external electrode on the negative electrode side can be joined. That is, the protective layer does not cover the entire surface of the battery element without a gap, but covers the battery element so that the extended portion of the electrode layer (end portion of the electrode layer) is exposed in order to join the extended portion of the electrode layer of the battery element and the external electrode.

### [Characteristic Part of Solid State Battery of Present Invention]

In consideration of the basic configuration of the solid state battery, the characteristic part of the solid state battery according to an embodiment of the present invention will be described below.

The inventors of the present application have extensively conducted studies on an aspect for "suppressing generation of an electron conduction path continuous in a solid electrolyte layer located between a positive electrode layer and a negative electrode layer" which causes deterioration in characteristics of a solid state battery.

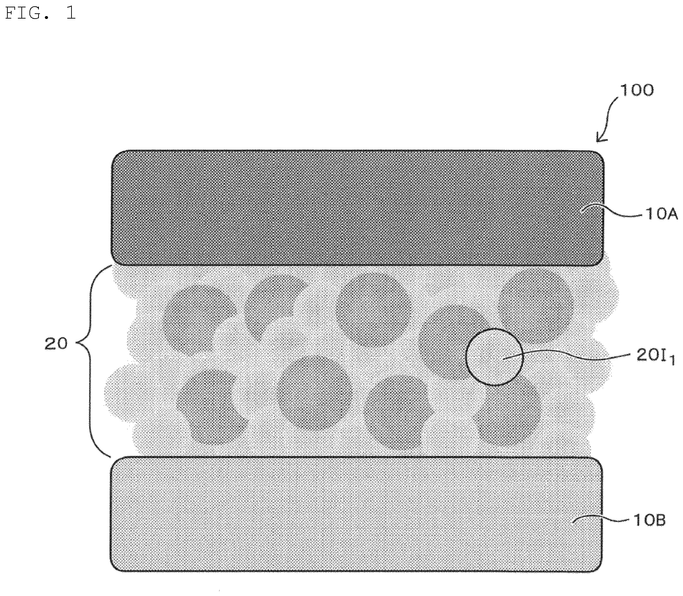

In particular, the inventors of the present application focus on a constituent ratio of a transition metal element to all metal elements (excluding lithium) contained in the solid electrolyte particles of the solid electrolyte layer. As a result, the present invention has been made. Specifically, based on such attention points, the inventors of the present application have devised the present invention having a technical idea that "the constituent ratio of the transition metal element to all metal elements (excluding lithium) contained in solid electrolyte particles 20I₁ of at least a solid electrolyte layer 20 is set within a predetermined range (0.0% or more and 15% or less)" (see FIG. 1). As described above, when the solid electrolyte particles contain a transition metal element, the solid electrolyte particles are easily affected by a potential change of the positive electrode/negative electrode during charging and discharging; therefore, the inventors of the present application have found that the solid electrolyte layer can contain the solid electrolyte particles containing no transition metal element in the composition (the constituent ratio (%) of the transition metal element to all metal elements (excluding lithium): 0.0%).

According to such a technical idea, the solid electrolyte layer 20 located between electrodes 10A and 10B includes, as a constituent element thereof, solid electrolyte particles 20₁ having a portion in which the constituent ratio of the transition metal element is relatively low (0.0% or more and 15% or less). Thus, there are the following advantages as compared with a case of including only solid electrolyte particles in which the constituent ratio of the transition metal element is relatively high (for example, more than 150). Specifically, if the solid electrolyte particle 20I₁ is affected by the potential change of the positive electrode 10A/the negative electrode 10B during charging and discharging, the constituent ratio of the transition metal element, which is easily affected by the potential change of the positive electrode 10A/the negative electrode 10B, in the solid electrolyte particle 20I₁ is relatively low (0.0% or more and 15% or less). Thus, a reaction (oxidation-reduction reaction) ratio of the transition metal element easily affected by the potential change can be reduced. From the viewpoint of further decreasing the reaction (oxidation-reduction reaction) ratio of the transition metal element, the constituent ratio of the transition metal element to all metal elements (excluding lithium) contained in the solid electrolyte particles 20I₁ of at least the solid electrolyte layer 20 is preferably 1% or more and 10% or less.

As a result, in the solid electrolyte layer 20 located between the positive electrode layer 10A and the negative electrode layer 10B, it is possible to suppress deterioration of the ion conductivity due to inhibition of a predetermined ion conduction path. In addition, since the reaction (oxidation-reduction reaction) ratio of the transition metal element easily affected by the potential change of the positive electrode 10A/the negative electrode 10B can be reduced, it is possible to suppress the continuation of the electron conduction path in the solid electrolyte layer 20 via the reacted transition metal. That is, when the reaction (oxidation-reduction reaction) ratio of the transition metal element can be reduced, the continuation of the electron conduction path can be blocked.

From the above, according to the technical idea of the present invention, the solid electrolyte particle 20I₁ "including the portion in which the constituent ratio of the transition metal element is relatively low (0.0% or more and 15% or less)" contained in the solid electrolyte layer 20 located between the positive electrode layer 10A and the negative electrode layer 10B can suitably function as an "ion conductive material" and can also suitably function as an "electron conduction path blocking material". Since the presence of the solid electrolyte particles 20I₁ can block the continuation of the electron conduction path, the occurrence of a short circuit between the positive electrode 10A and the negative electrode 10B due to this can be suppressed. As a result, deterioration of the characteristics of the solid state battery can be suitably suppressed. In this respect, the invention is advantageous.

The "solid electrolyte particles 20I₁ including the portion in which the constituent ratio of the transition metal element to all metal elements (excluding lithium) is 0.0% or more and 15% or less" used herein refers to the fact that "the single solid electrolyte particle 20I₁ has at least a part of the portion in which the constituent ratio of the transition metal element to all metal elements (excluding lithium) is 0.0% or more and 15% or less". As an example, in the entire single solid electrolyte particle 20I₁, the constituent ratio of the transition metal element to all metal elements (excluding lithium) is 0.0% or more and 15% or less. In a part of the single solid electrolyte particle 20I₁, the constituent ratio of the transition metal element to all metal elements (excluding lithium) may be 0.0% or more and 15% or less.

Hereinafter, aspects for embodying the technical idea of the present invention will be described.

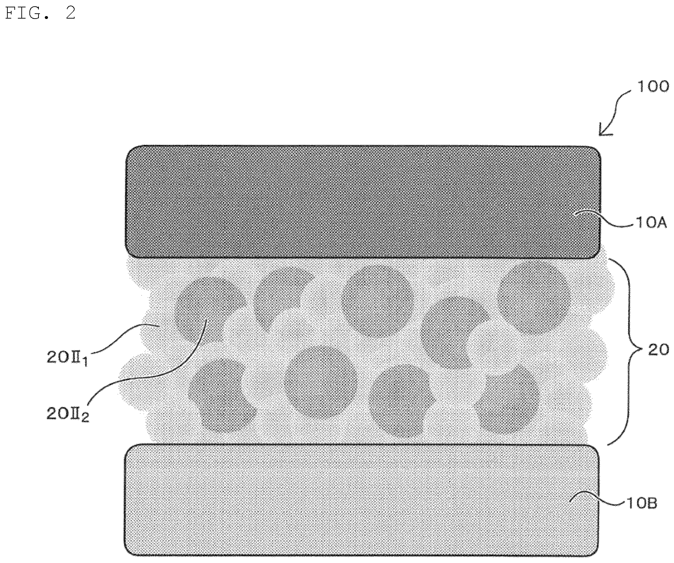

In one aspect, the solid electrolyte layer 20 includes first solid electrolyte particles 20II₁ in which the constituent ratio of the transition metal element is 15% or less, and second solid electrolyte particles 20II₂ in which the constituent ratio of the transition metal element is more than 15%. In particular, in the present aspect, the second solid electrolyte particles 20II₂ are interspersed and arranged so as to be separated from each other in a main part of the solid electrolyte layer 20 in which the first solid electrolyte particles 20II₁ are arranged in a matrix form (see FIG. 2).

In the present aspect, as shown in FIG. 2, the solid electrolyte layer 20 located between the electrodes 10A and 10B includes the main part of the solid electrolyte layer 20 in which the first solid electrolyte particles 20II₁ are arranged in a matrix form, and the second solid electrolyte particles 20II₂ interspersed and arranged so as to be separated from each other in the main part.

The term "matrix form" used herein refers to a state in which the first solid electrolyte particles 20II₁ are arranged in a matrix pattern. The term "main part of the solid electrolyte layer 20" used herein refers to a main part constituting the solid electrolyte layer 20.

In the present aspect, the main part of the solid electrolyte layer 20 is composed of the first solid electrolyte particles 20II₁ arranged in a matrix form. In the first solid electrolyte particle 20II₁, the constituent ratio of the transition metal element is 15% or less. That is, in the present aspect, the main part constituting the solid electrolyte layer 20 is formed from a material having a relatively low constituent ratio of the transition metal element. Therefore, if the first solid electrolyte particle 20II₁ is affected by the potential change of the positive electrode 10A/the negative electrode 10B during charging and discharging, since the constituent ratio of the transition metal element easily affected by the potential change of the electrode is relatively low in the main part constituting the solid electrolyte layer 20, the reaction (oxidation-reduction reaction) ratio of the transition metal element easily affected by the potential change can be reduced. This makes it possible to block the continuation of the electron conduction path in the first solid electrolyte particle 20II₁ via the reacted transition metal.

On the other hand, in the second solid electrolyte particle 20II₂, the constituent ratio of the transition metal element is more than 15%. That is, the second solid electrolyte particles 20II₂ are formed from a material having a relatively high constituent ratio of the transition metal elements. It can be said that when the constituent ratio of the transition metal element easily affected by the potential change of the electrode is relatively high, the reaction (oxidation-reduction reaction) ratio of the transition metal element increases due to this. Thus, an electron conduction path may be formed in the second solid electrolyte particle 20II₂ via the reacted transition metal.

In this regard, in the present aspect, the second solid electrolyte particles 20II₂ are interspersed so as to be separated in the main part of the solid electrolyte layer 20. With such a separation arrangement, each of the second solid electrolyte particles 20II₂ is disposed so as to be surrounded by the first solid electrolyte particles 20II₁. Specifically, each of the second solid electrolyte particles 20II₂ in which the electron conduction path may be formed is disposed so as to be surrounded by the first solid electrolyte particles 20II₁ that can block the continuation of the electron conduction path. Therefore, it is possible to more suitably suppress that the electron conduction path by the second solid electrolyte particles 20II₂ is continued between the positive electrode 10A and the negative electrode 10B side via the solid electrolyte layer 20. As a result, it is possible to more suitably suppress the occurrence of the short circuit between the positive electrode 10A and the negative electrode 10B, whereby deterioration of the characteristics of the solid state battery can be more suitably suppressed.

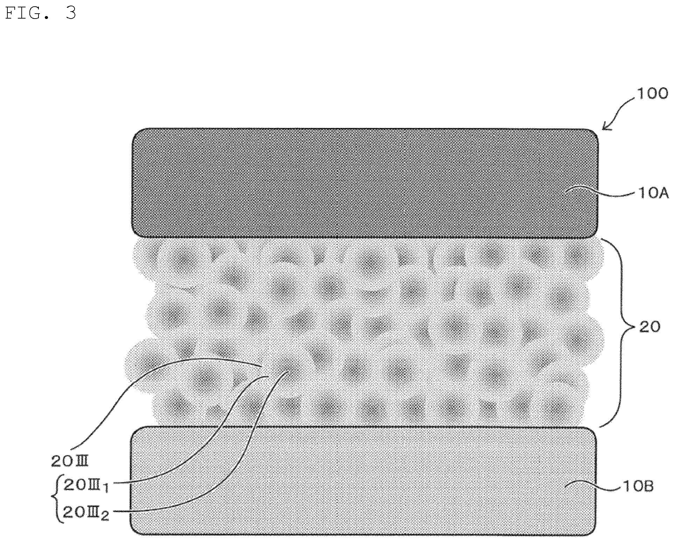

In one aspect, the solid electrolyte particles 20III may have a core/shell structure. A core portion 20III₂ of the core/shell structure is the portion in which the constituent ratio of the transition metal element is more than 15%, and a shell portion 20III₁ surrounds the core portion 20III₂ and is a portion in which the constituent ratio of the transition metal element is 15% or less (see FIG. 3).

In the present aspect, as illustrated in FIG. 3, the core/shell structure including the core portion 20III₂ and the shell portion 20III₁ is adopted. The core portion 20III₂ is the portion in which the constituent ratio of the transition metal element is larger than 15%, that is, a portion in which a ratio of the transition metal element is relatively large. The shell portion 20III₁ surrounding the core portion 20III₂ is the portion in which the constituent ratio of the transition metal element is 15% or less, that is, a portion in which the ratio of the transition metal element is relatively small.

The "core portion" used herein refers to a core part, that is, a main part, of the constituent elements of the single solid electrolyte particle. In addition, the "shell portion" used herein refers to an outer shell portion surrounding and covering the entire surface of the core portion in the constituent elements of the single solid electrolyte particle, and refers to a portion other than the core portion.

That is, in the present aspect, the single solid electrolyte particle 20III has a configuration in which while the ratio of the transition metal element in its inner portion (core portion) is relatively large, the ratio of the transition metal element in its outer shell portion (shell portion) is relatively small. In the case of adopting such a configuration, the outer shell portion of the single solid electrolyte particle 20III is a portion in which the ratio of the transition metal element is relatively small (portion in which the ratio is 15% or less). Therefore, if the solid electrolyte particle 20III is affected by the potential change of the positive electrode 10A/the negative electrode 10B during charging and discharging, since the outer shell portion of the single solid electrolyte particle 20III is a portion having a relatively small ratio of the transition metal element, it is possible to reduce the reaction (oxidation-reduction reaction) ratio of the transition metal element easily affected by the potential change. This makes it possible to block the continuation of the electron conduction path in the outer shell portion (shell portion) of the solid electrolyte particle 20III via the reacted transition metal.

On the other hand, the ratio of the transition metal element in the inner portion (that is, the core portion 20III₂) of the single solid electrolyte particle 20III is a relatively high portion (portion in which the ratio is 15% or less). It can be said that when the constituent ratio of the transition metal element easily affected by the potential change of the electrode is relatively high, the reaction (oxidation-reduction reaction) ratio of the transition metal element increases due to this. Thus, there is a possibility that the electron conduction path continues to the core portion 20III₂ of the solid electrolyte particle 20III via the reacted transition metal.

In this regard, in the present aspect, the entire surface of the core portion 20III₂ of the solid electrolyte particle 20III is surrounded by the shell portion 20III₁ that can block the continuation of the electron conduction path. Thus, it is possible to avoid that the electron conduction path continues up to the core portion 20III₂ located inside the shell portion 20III₁ of the solid electrolyte particle 20III. As a result, when focusing on the single solid electrolyte particle 20III, it is possible to avoid that the electron conduction path enters from the shell portion, then passes through the core portion, and exits from the shell portion. As a result, when the solid electrolyte particles 20III are arranged so as to be in contact with each other between the positive electrode 10A side and the negative electrode 10B side, it is possible to suitably suppress the continuation of the electron conduction path between the positive electrode 10A side and the negative electrode 10B side via each of the solid electrolyte particles 20III, that is, via the solid electrolyte layer 20. As a result, it is possible to more suitably suppress the occurrence of the short circuit between the positive electrode 10A and the negative electrode 10B, whereby deterioration of the characteristics of the solid state battery can be more suitably suppressed.

The present invention preferably adopts the following aspects.

In one aspect, it is preferable that the solid electrolyte layer 20 is a single layer, and the plurality of solid electrolyte particles 20I₁ are randomly arranged in the solid electrolyte layer which is a single layer (see FIG. 1).

As described above, in the present invention, the solid electrolyte particle 20I₁ is characterized in that the constituent ratio of the transition metal element easily affected by the potential change of the positive electrode 10A/the negative electrode 10B is relatively low (0.0% or more and 15% or less). Thus, the reaction (oxidation-reduction reaction) ratio of the transition metal element easily affected by the potential change of the positive electrode 10A/the negative electrode 10B can be reduced. This makes it possible to block the continuation of the electron conduction path in the solid electrolyte layer 20 via the reacted transition metal.

In this regard, it is advantageous in the following respects that the plurality of solid electrolyte particles 20I₁ having the above characteristics are provided and are randomly arranged in the solid electrolyte layer 20 formed of a single layer. Specifically, due to such a random arrangement, the solid electrolyte particles 20I₁ having the above characteristics can be provided so as to be distributed throughout the inside of the solid electrolyte layer 20. As a result, an "electron conduction path blocking function" of the solid electrolyte particle 20I₁ can be exhibited at any plurality of locations in the solid electrolyte layer 20.

In the present aspect, between the positive electrode 10A and the negative electrode 10B, the solid electrolyte particles 20I₁ having the above characteristics are randomly arranged in the solid electrolyte layer 20 formed of only a single layer. However, it should be additionally noted that the present aspect is not an aspect in which, for example, a layer in which the constituent ratio of the transition metal element is relatively low and a layer in which the constituent ratio of the transition metal element is relatively high are alternately arranged along the stacking direction between the positive electrode and the negative electrode. In such an alternate aspect, as will be described later, for example, using a mixture of the solid electrolyte particles in which the constituent ratio of the transition metal element is relatively low and the solid electrolyte particles in which the constituent ratio of the transition metal element is relatively high, a solid electrolyte layer having a multilayer structure is formed as compared with the case of manufacturing a solid state battery including a single solid electrolyte layer between electrodes. Therefore, it is considered to be not suitable from the viewpoint of manufacturing efficiency.

In one aspect, at least one of the positive electrode layer 10A and the negative electrode layer 10B preferably further contains the solid electrolyte particle.

Specifically, at least one of the positive electrode layer 10A and the negative electrode layer 10B preferably further contains the solid electrolyte particles "in which the constituent ratio of the transition metal element easily affected by the potential change of the positive electrode 10A/the negative electrode 10B" is relatively low (0.0% or more and 15% or less)". In general, it is known that the active material contained in each of the positive electrode layer 10A and the negative electrode layer 10B is not high in ion conductivity and electron conductivity. Thus, the solid electrolyte particles can be provided from the viewpoint of supplementing the ion conductivity, and the conductive aid can be provided from the viewpoint of supplementing the electron conductivity.

In particular, when at least one of the positive electrode layer 10A and the negative electrode layer 10B contains the solid electrolyte particles in which the constituent ratio of the transition metal element is relatively low (0.0% or more and 15% or less), there are advantages in the following points. Specifically, if the potential change of the positive electrode 10A/the negative electrode 10B occurs during charging and discharging, the constituent ratio of the transition metal element, which is easily affected by the potential change of the positive electrode 10A/the negative electrode 10B, in the solid electrolyte particle is relatively low (0.0% or more and 15% or less). Thus, a reaction (oxidation-reduction reaction) ratio of the transition metal element easily affected by the potential change can be reduced. As a result, as compared with the case where the electrode layer includes normal solid electrolyte particles not having the above characteristics (characteristics that the reaction (oxidation-reduction reaction) ratio of the transition metal element is small), it is possible to suppress that the ion conduction path is inhibited to rather lower the ion conductivity.

The solid electrolyte particles used in the present invention preferably adopt the following aspects.

The solid electrolyte particle used in the present invention may be composed of at least one selected from the group consisting of a lithium-containing phosphate compound having a NASICON-type structure, a lithium-containing compound having a LISICON-type structure, a lithium-containing oxide having a garnet-type structure, and the like.

Although not particularly limited, the solid electrolyte particle used in the present invention preferably contains a lithium-containing phosphate compound having a NASICON structure represented by the following Formula 1.

[Formula 1] Li₁₊ₓMi_{2-y}Mii_{y}(PO₄)₃

(wherein 0 ≤ x ≤ 1, 0.0 ≤ y ≤ 0.3, Mi: at least one selected from the group consisting of Al, Ga, Ge, Zr, Ca, and In, and Mii: at least one selected from the group consisting of Ti, V, Co, and Fe).

Although not particularly limited, x in the above Formula 1 can be 0 or more and 1 or less (as described above), preferably 0.1 or more and 0.9 or less, 0.2 or more and 0.8 or less, 0.3 or more and 0.7 or less, 0.4 or more and 0.6 or less, and may be, for example, 0.5.

Although not particularly limited, y in the above Formula 1 can be 0.0 or more and 0.3 or less (as described above), and can be preferably 0.01 or more and 0.3 or less, 0.01 or more and 0.25 or less, more preferably 0.01 or more and 0.2 or less, still more preferably 0.01 or more and 0.15 or less, and still more preferably 0.01 or more and 0.1 or less.

Although not particularly limited, Mi in the above Formula 1 can be at least two selected from the group consisting of Al, Ga, Ge, Zr, Ca, and In. For example, two kinds of Al and Ge may be selected. Molar ratios of the respective elements in the formula do not necessarily coincide with each other, and the molar ratios tend to deviate relative thereto depending on an analysis method; however, the effect of the present invention is exhibited unless composition deviation is such that the characteristics change.

Although not particularly limited, Ti can be selected as an example of Mii in the above Formula 1.

Although not particularly limited, examples of the above Formula 1 include Li_{1.5}Al_{0.5}Ge_{1.2}Ti_{0.3}(PO₄)₃.

### [Method of Manufacturing Solid State Battery of Present Invention]

Hereinafter, a method of manufacturing a solid state battery according to an embodiment of the present invention will be described. The present manufacturing method is merely an example, and it will be described in advance that a case of using another method (screen printing method or the like) is not excluded.

The solid state battery according to an embodiment of the present invention can be manufactured using a green sheet method using a green sheet. In one aspect, after a predetermined laminate is formed mainly by the green sheet method, the solid state battery according to an embodiment of the present invention can be finally manufactured. In the following description, the description will be given on the premise of this aspect; however, the present invention is not limited thereto, and a predetermined laminate can be formed mainly by the screen printing method or the like.

### (Step of Forming Unfired Laminate)

First, a solid electrolyte layer paste, a positive electrode active material layer paste, a positive electrode current collector layer paste, a negative electrode active material layer paste, a negative electrode current collector layer paste, an insulating layer paste, and a protective layer paste are applied onto each substrate (for example, a PET film).

Each paste can be prepared by wet mixing a predetermined constituent material of each layer appropriately selected from the group consisting of the positive electrode active material, the negative electrode active material, the conductive material, the solid electrolyte material, the insulating material, and the sintering aid, with an organic vehicle in which an organic material is dissolved in a solvent. The positive electrode active material layer paste contains, for example, a positive electrode active material, a conductive material, a solid electrolyte material, an organic material, and a solvent. The negative electrode active material layer paste contains, for example, a negative electrode active material, a conductive material, a solid electrolyte material, an organic material, and a solvent. The positive electrode current collector layer paste/negative electrode current collector layer paste may be, for example, at least one selected from the group consisting of silver, palladium, gold, platinum, aluminum, copper, and nickel. The solid electrolyte layer paste contains, for example, a solid electrolyte material, a sintering aid, an organic material, and a solvent. The protective layer paste contains, for example, an insulating material, an organic material, and a solvent. The insulating layer paste contains, for example, an insulating material, an organic material, and a solvent.

In the wet mixing, a medium can be used, and specifically, a ball mill method, a visco mill method, or the like can be used. On the other hand, wet mixing methods may be used which use no media, and a sand mill method, a high-pressure homogenizer method, a kneader dispersion method, or another method can be used.

As the solid electrolyte material, as described above, a powder containing at least one compound selected from the group consisting of a lithium-containing phosphate compound having a NASICON-type structure, a lithium-containing compound having a LISICON-type structure, a lithium-containing compound having a garnet-type structure, and the like can be selected.

In particular, in the present invention, it is preferable to select a predetermined solid electrolyte material so that the solid electrolyte layer that is a constituent element of the solid state battery finally obtained can contain the solid electrolyte particles having the portion in which the constituent ratio of the transition metal element to all metal elements (excluding lithium) is 0.0% or more and 15% or less. A predetermined solid electrolyte layer paste can be prepared by wet-mixing the predetermined solid electrolyte material, a sintering aid, and an organic vehicle in which an organic material is dissolved in a solvent.

As an example, it is preferable to select at least two kinds of solid electrolyte materials. For example, it is preferable to select at least two kinds of solid electrolyte materials so that the solid electrolyte layer that is a constituent element of the solid state battery finally obtained can contain the solid electrolyte particles having the portion in which the constituent ratio of the transition metal element to at least all metal elements (excluding lithium) is 0.0% or more and 15% or less, and the solid electrolyte particles having the portion in which the constituent ratio of the transition metal element to all metal elements (excluding lithium) is more than 15%. A predetermined solid electrolyte layer paste can be prepared by wet-mixing the at least two kinds of solid electrolyte materials, a sintering aid, and an organic vehicle in which an organic material is dissolved in a solvent.

As another example, it is preferable to use a solid electrolyte material (particles) having a two-layer structure so that solid electrolyte particles contained in the solid electrolyte layer that is the constituent element of the solid state battery finally obtained can have a core-shell structure. Specifically, it is preferable to use the solid electrolyte material (particles) having the two-layer structure so that the solid electrolyte particles contained in the solid electrolyte layer that is the constituent element of the solid state battery finally obtained can have the core-shell structure (core portion: portion in which the constituent ratio of the transition metal element is more than 15%/shell portion: portion which surrounds the core portion and in which the constituent ratio of the transition metal element is 150 or less).

The solid electrolyte material (particles) having the two-layer structure can be obtained, for example, by the following method. As an example, the entire surface of the solid electrolyte material (particles) in which the constituent ratio of the transition metal element to all metal elements (excluding lithium) is relatively large is coated with the solid electrolyte material in which the constituent ratio of the transition metal element to all metal elements (excluding lithium) is relatively small. As a result, the solid electrolyte material having the two-layer structure can be obtained.

As still another example, after a predetermined solid electrolyte material is selected, heat treatment conditions can be appropriately controlled so that the shell portion of the solid electrolyte particles contained in the solid electrolyte layer that is the constituent element of the solid state battery finally obtained appears on the entire surface of the core portion in a later firing stage and the like. Specifically, after a predetermined solid electrolyte material is selected so that the solid electrolyte material can be a portion in which the constituent ratio of the transition metal element of the core portion of the solid electrolyte particles contained in the solid electrolyte layer that is the constituent element of the solid state battery finally obtained is more than 15% and a portion in which the shell portion surrounds the core portion and the constituent ratio of the transition metal element is 15% or less, the heat treatment conditions can be appropriately controlled, the heat treatment conditions can be appropriately controlled so that the shell portion appears on the entire surface of the core portion in the later firing stage and the like.

As the positive electrode active material contained in the positive electrode active material layer paste, for example, at least one is selected from the group consisting of a lithium-containing phosphate compound having a NASICON-type structure, a lithium-containing compound having a LISICON-type structure, a lithium-containing compound having a garnet-type structure, and the like.

The insulating material contained in the insulating layer paste may include, for example, a glass material, a ceramic material, or the like. As the insulating material contained in the protective layer paste, for example, it is preferable to use at least one selected from the group consisting of a glass material, a ceramic material, a thermosetting resin material, a photocurable resin material, and the like.

The organic material contained in the paste is not particularly limited, and it is possible to use at least one polymer material selected from the group consisting of a polyvinyl acetal resin, a cellulose resin, a polyacrylic resin, a polyurethane resin, a polyvinyl acetate resin, a polyvinyl alcohol resin, and the like. The solvent is not particularly limited as long as the organic material can be dissolved, and for example, toluene and/or ethanol can be used.

The negative electrode active material contained in the negative electrode active material layer paste can include, for example, the negative electrode active material selected from at least one from the group consisting of an oxide containing at least one element selected from the group consisting of Ti, Si, Sn, Cr, Fe, Nb, and Mo, a graphite-lithium compound, a lithium alloy, a lithium-containing phosphate compound having a NASICON-type structure, a lithium-containing phosphate compound having an olivine-type structure, a lithium-containing oxide having a spinel-type structure, and the like, a material contained in the solid electrolyte paste, a conductive material, and the like.

The sintering aid may be at least one selected from the group consisting of lithium oxide, sodium oxide, potassium oxide, boron oxide, silicon oxide, bismuth oxide, and phosphorus oxide.

The applied paste is dried on a hot plate heated to 30 to 50°C to form a solid electrolyte layer sheet, a positive electrode/negative electrode sheet, and an insulating layer sheet each having a predetermined thickness on a substrate (for example, a PET film).

Next, each sheet is peeled off from the substrate. After the peeling, the sheets of the constituent elements of the battery constituent unit are sequentially stacked along the stacking direction. After the stacking, the solid electrolyte layer sheet or the insulating layer sheet may be provided by screen printing in a side region of an electrode sheet before later pressing. Then, it is preferable to perform thermocompression bonding at a predetermined pressure (for example, from about 50 to about 100 MPa) and isostatic pressing at a predetermined pressure (for example, from about 150 to about 300 MPa) following the thermocompression bonding. As described above, a predetermined laminate can be formed.

### (Firing Step)

The obtained predetermined laminate is subjected to firing. The firing is performed by heating at, for example, 600°C to 1000°C in a nitrogen gas atmosphere.

Next, a terminal is attached to a resulting laminate. The terminal is provided so as to be electrically connectable to each of the positive electrode layer and the negative electrode layer. For example, it is preferable to form the terminal by sputtering or the like. Although not particularly limited, the terminal is preferably formed from at least one selected from silver, gold, platinum, aluminum, copper, tin, and nickel. In addition, it is preferable to provide a protective layer to such an extent that the terminal is not covered by sputtering, spray coating, or the like.

As described above, the solid state battery according to an embodiment of the present embodiment can be suitably manufactured (see FIG. 1).

The obtained solid state battery according to an embodiment of the present invention has a feature that "the constituent ratio of the transition metal element to all metal elements (excluding lithium) contained in the solid electrolyte particles 20I₁ of at least the solid electrolyte layer 20 is within a predetermined range (0.0% or more and 15% or less)" (see FIG. 1).

According to such a feature, the solid electrolyte layer 20 located between the electrodes 10A and 10B includes, as the constituent element thereof, the solid electrolyte particles 20I₁ having the portion in which the constituent ratio of the transition metal element is relatively low (0.0% or more and 15% or less). Thus, as compared with the case where only the solid electrolyte particles in which the constituent ratio of the transition metal element is relatively high (for example, more than 15%) are included, if the solid electrolyte particle 20I₁ is affected by the potential change of the positive electrode 10A/the negative electrode 10B during charging and discharging, the constituent ratio of the transition metal element, which is easily affected by the potential change of the positive electrode 10A/the negative electrode 10B, in the solid electrolyte particle 20I₁ is relatively low (0.0% or more and 15% or less). Thus, a reaction (oxidation-reduction reaction) ratio of the transition metal element easily affected by the potential change can be reduced.

As a result, in the solid electrolyte layer 20 located between the positive electrode layer 10A and the negative electrode layer 10B, it is possible to suppress deterioration of the ion conductivity due to inhibition of a predetermined ion conduction path. In addition, since the reaction (oxidation-reduction reaction) ratio of the transition metal element easily affected by the potential change of the positive electrode 10A/the negative electrode 10B can be reduced, it is possible to suppress the continuation of the electron conduction path in the solid electrolyte layer 20 via the reacted transition metal. That is, when the reaction (oxidation-reduction reaction) ratio of the transition metal element can be reduced, the continuation of the electron conduction path can be blocked.

### EXAMPLES

Hereinafter, Examples related to the present invention will be described. In this Example, the solid state battery including the solid electrolyte layer containing the solid electrolyte particles having the composition shown in the following Examples was manufactured.

Specifically, a solid electrolyte layer paste, a positive electrode active material layer paste, a positive electrode current collector layer paste, a negative electrode active material layer paste, a negative electrode current collector layer paste, and a protective layer paste were first applied onto each PET film.

- Positive electrode active material layer paste
   Positive electrode active material (Li₃V₂(PO₄)₃), solid electrolyte material (as shown in the following Examples), organic material (polyvinyl acetal resin), and solvent (toluene)
- Negative electrode active material layer paste
   Negative electrode active material (LiTi₂(PO₄)₃, solid electrolyte material (as shown in the following Examples), organic material (polyvinyl acetal resin), and solvent (toluene)
- Positive electrode current collector layer paste/negative electrode current collector layer paste
   Aluminum
- Protective layer paste
   Insulating material (glass material), organic material (polyvinyl acetal resin), and solvent (toluene)
- Solid electrolyte layer paste
   Solid electrolyte material (as shown in the following Examples), sintering aid (silicon oxide), organic material (polyvinyl acetal resin), and solvent (toluene)

In this example, one kind of solid electrolyte particle was selected as the solid electrolyte material from the viewpoint of directly evaluating a degree of insulating properties described later.

Next, the applied paste was dried on a hot plate heated to 30 to 50°C to form each sheet on a PET film. Thereafter, each sheet was peeled off from the PET film. After the peeling, the sheets of the constituent elements of the battery constituent unit were sequentially stacked along the stacking direction. After the stacking, the solid electrolyte layer sheet was provided by screen printing in the side region of the electrode sheet. Subsequently, thermocompression bonding was performed at a pressure of about 100 MPa, and isostatic pressing was performed at about 200 MPa following the thermocompression bonding. As described above, a predetermined laminate was formed.

The obtained predetermined laminate was subjected to firing. In the firing, after the organic material was removed in a nitrogen gas atmosphere containing oxygen gas or in the atmosphere at 500°C, heating was performed in the nitrogen gas atmosphere at 800°C. Thereafter, a terminal was attached to the laminate obtained by sputtering so as to be electrically connectable to each of the positive electrode layer and the negative electrode layer. In addition, a protective layer was provided to such an extent that the terminal was not covered by sputtering.

As described above, each solid state battery was manufactured.

After each solid state battery was manufactured, each solid state battery was charged, and a change in voltage after resting for 1 hour was confirmed. The results are as shown in Table 1 (relationship between solid electrolyte material and insulating properties) below.

**[Table 1] Relationship between solid electrolyte material and insulating properties**

| | Composition | Insulating properties | Example of criterion of insulating properties |
|---|---|---|---|
| Example 1 | Li_{1.00}Ge_{1.99}Ti_{0.01}(PO₄)₃ | **⊙** | After charging, voltage change during resting for 1 hour is small and is less than 0.1 V |
| Example 2 | Li_{1.00}Ge_{1.95}Ti_{0.05}(PO₄)₃ | **⊙** | After charging, voltage change during resting for 1 hour is small and is less than 0.1 V |
| Example 3 | Li_{1.00}Ge_{1.90}Ti_{0.10}(PO₄)₃ | **⊙** | After charging, voltage change during resting for 1 hour is small and is less than 0.1 V |
| Example 4 | Li_{1.00}Ge_{1.70}Ti_{0.30}(PO₄)₃ | **○** | After charging, voltage change during resting for 1 hour is small and is less than 0.2 V |
| Comparative Example 5 | Li_{1.00}Ge_{1.65}Ti_{0.35}(PO₄)₃ | × | After charging, voltage change during resting for 1 hour is large and is 0.2 V or more |
| Comparative Example 6 | Li_{1.00}Ge_{1.50}Ti_{0.50}(PO₄)₃ | × | After charging, voltage change during resting for 1 hour is large and is 0.2 V or more |
| Example 7 | Li_{1.50}Al_{0.50}Ge_{1.49}Ti_{0.01}(PO₄)₃ | **⊙** | After charging, voltage change during resting for 1 hour is small and is less than 0.1 V |
| Example 8 | Li_{1.50}Al_{0.50}Ge_{1.40}Ti_{0.10}(PO₄)₃ | **⊙** | After charging, voltage change during resting for 1 hour is small and is less than 0.1 V |
| Example 9 | Li_{1.50}Al_{0.50}Ge_{1.30}Ti_{0.20}(PO₄)₃ | **⊙** | After charging, voltage change during resting for 1 hour is small and is less than 0.1 V |
| Example 10 | Li_{1.50}Al_{0.50}Ge_{1.25}Ti_{0.25}(PO₄)₃ | **○** | After charging, voltage change during resting for 1 hour is small and is less than 0.2 V |
| Example 11 | Li_{1.50}Al_{0.50}Ge_{1.20}Ti_{0.30}(PO₄)₃ | **○** | After charging, voltage change during resting for 1 hour is small and is less than 0.2 V |
| Comparative Example 12 | Li_{1.50}Al_{0.50}Ge_{1.10}Ti_{0.40}(PO₄)₃ | × | After charging, voltage change during resting for 1 hour is large and is 0.2 V or more |
| Comparative Example 13 | Li_{1.50}Al_{0.50}Ge_{0.50}Ti_{1.00}(PO₄)₃ | × | After charging, voltage change during resting for 1 hour is large and is 0.2 V or more |
| Comparative Example 14 | Li_{1.50}Al_{0.50}Ge_{0.10}Ti_{1.40}(PO₄)₃ | × | After charging, voltage change during resting for 1 hour is large and is 0.2 V or more |
| Example 15 | Li_{1.35}Al_{0.35}Ge_{1.64}Ti_{0.01}(PO₄)₃ | **⊙** | After charging, voltage change during resting for 1 hour is small and is less than 0.1 V |
| Example 16 | Li_{1.35}Al_{0.35}Ge_{1.60}Ti_{0.05}(PO₄)₃ | **⊙** | After charging, voltage change during resting for 1 hour is small and is less than 0.1 V |
| Example 17 | Li_{1.35}Al_{0.35}Ge_{1.55}Ti_{0.10}(PO₄)₃ | **⊙** | After charging, voltage change during resting for 1 hour is small and is less than 0.1 V |
| Example 18 | Li_{1.35}Al_{0.35}Ge_{1.45}Ti_{0.30}(PO₄)₃ | **⊙** | After charging, voltage change during resting for 1 hour is small and is less than 0.1 V |
| Example 19 | Li_{1.35}Al_{0.35}Ge_{1.35}Ti_{0.30}(PO₄)₃ | **○** | After charging, voltage change during resting for 1 hour is small and is less than 0.2 V |
| Comparative Example 20 | Li_{1.35}Al_{0.35}Ge_{1.30}Ti_{0.35}(PO₄)₃ | × | After charging, voltage change during resting for 1 hour is large and is 0.2 V or more |
| Comparative Example 21 | Li_{1.35}Al_{0.35}Ge_{1.65}Ti_{1.00}(PO₄)₃ | × | After charging, voltage change during resting for 1 hour is large and is 0.2 V or more |
| Comparative Example 22 | Li_{1.35}Al_{0.35}Ge_{0.15}Ti_{1.50}(PO₄)₃ | × | After charging, voltage change during resting for 1 hour is large and is 0.2 V or more |
| Example 23 | Li_{1.20}Ca_{0.10}Zr_{1.89}Ti_{0.01}(PO₄)₃ | **⊙** | After charging, voltage change during resting for 1 hour is small and is less than 0.1 V |
| Example 24 | Li_{1.20}Ca_{0.10}Zr_{1.87}Ti_{0.03}(PO₄)₃ | **⊙** | After charging, voltage change during resting for 1 hour is small and is less than 0.1 V |
| Example 25 | Li_{1.20}Ca_{0.10}Zr_{1.80}Ti_{0.10}(PO₄)₃ | **⊙** | After charging, voltage change during resting for 1 hour is small and is less than 0.1 V |
| Example 26 | Li_{1.20}Ca_{0.10}Zr_{1.60}Ti_{0.30}(PO₄)₃ | **○** | After charging, voltage change during resting for 1 hour is small and is less than 0.2 V |
| Comparative Example 27 | Li_{1.20}Ca_{0.10}Zr_{0.20}Ti_{1.70}(PO₄)₃ | × | After charging, voltage change during resting for 1 hour is large and is 0.2 V or more |
| Comparative Example 28 | Li_{1.20}Ca_{0.10}Zr_{0.01}Ti_{1.89}(PO₄)₃ | × | After charging, voltage change during resting for 1 hour is large and is 0.2 V or more |
| Example 29 | Li_{1.02}Ge_{1.99}Fe_{0.01}(PO₄)₃ | **⊙** | After charging, voltage change during resting for 1 hour is small and is less than 0.1 V |
| Example 30 | Li_{1.20}Ge_{1.90}Fe_{0.10}(PO₉)₃ | **⊙** | After charging, voltage change during resting for 1 hour is small and is less than 0.1 V |
| Example 31 | Li_{1.60}Ge_{1.70}Fe_{0.30}(PO₄)₃ | **○** | After charging, voltage change during resting for 1 hour is small and is less than 0.2 V |
| Comparative Example 32 | Li_{1.70}Ge_{1.65}Fe_{0.35}(PO₄)₃ | × | After charging, voltage change during resting for 1 hour is large and is 0.2 V or more |
| Example 33 | Li_{1.12}Ca_{0.05}Zr_{1.99}Fe_{0.01}(PO₄)₃ | **⊙** | After charging, voltage change during resting for 1 hour is small and is less than 0.1 V |
| Example 34 | Li_{1.30}Ca_{0.05}Zr_{1.90}Fe_{0.10}(PO₄)₃ | **⊙** | After charging, voltage change during resting for 1 hour is small and is less than 0.1 V |
| Example 35 | Li_{1.70}Ca_{0.05}Zr_{1.70}Fe_{0.30}(PO₄)₃ | **○** | After charging, voltage change during resting for 1 hour is small and is less than 0.2 V |
| Comparative Example 36 | Li_{1.76}Ca_{0.05}Zr_{1.65}Fe_{0.33}(PO₄)₃ | × | After charging, voltage change during resting for 1 hour is large and is 0.2 V or more |

**[Table 2] Constituent ratio (%) of transition metal element to all metal elements (excluding lithium)**

| | | All metal elements (excluding lithium) | Transition metal element | Constituent ratio (%) of transition metal element to all metal elements (excluding lithium) |
|---|---|---|---|---|
| Example | 1 | 0.01 | 2 | 0.5 |
| Example | 2 | 0.05 | 2 | 2.5 |
| Example | 3 | 0.1 | 2 | 5 |
| Example | 4 | 0.3 | 2 | 15 |
| Comparative Example | 5 | 0.35 | 2 | 17.5 |
| Comparative Example | 6 | 0.5 | 2 | 25 |
| | | | | |
| Example | 7 | 0.01 | 2 | 0.5 |
| Example | 8 | 0.1 | 2 | 5 |
| Example | 9 | 0.2 | 2 | 10 |
| Example | 10 | 0.25 | 2 | 12.5 |
| Example | 11 | 0.3 | 2 | 15 |
| Comparative Example | 12 | 0.4 | 2 | 20 |
| Comparative Example | 13 | 1 | 2 | so |
| Comparative Example | 14 | 1.4 | 2 | 70 |
| | | | | |
| Example | 15 | 0.01 | 2 | 0.5 |
| Example | 16 | 0.05 | 2 | 2.5 |
| Example | 17 | 0.1 | 2 | 5 |
| Example | 18 | 0.2 | 2 | 10 |
| Example | 19 | 0.3 | 2 | 15 |
| Comparative Example | 20 | 0.35 | 2 | 17.5 |
| Comparative Example | 21 | 1 | 2 | 50 |
| Comparative Example | 22 | 1.5 | 2 | 75 |
| | | | | |
| Example | 23 | 0.01 | 2 | 0.5 |
| Example | 24 | 0.03 | 2 | 1.5 |
| Example | 25 | 0.1 | 2 | 5 |
| Example | 26 | 0.3 | 2 | 15 |
| Comparative Example | 27 | 1.7 | 2 | 85 |
| Comparative Example | 28 | 1.89 | 2 | 94.5 |
| | | | | |
| Example | 29 | 0.01 | 2 | 0.5 |
| Example | 30 | 0.1 | 2 | 5 |
| Example | 31 | 0.3 | 2 | 15 |
| Comparative Example | 32 | 0.35 | 2 | 17.5 |
| | | | | |
| Example | 33 | 0.01 | 2 | 0.5 |
| Example | 34 | 0.1 | 2 | 5 |
| Example | 35 | 0.3 | 2 | 15 |
| Comparative Example | 36 | 0.33 | 2 | 16.5 |

As shown in Table 1, in Examples 1 to 4, 7 to 11, 15 to 19, 23 to 26, 29 to 31, and 33 to 35, the solid state battery was charged, and the voltage change after resting for 1 hour was less than 0.2 V, which satisfied the standard for ensuring the insulation properties. Under a situation where such insulating properties were secured, as shown in Table 2 (the constituent ratio (%) of the transition metal element to all metal elements (excluding lithium)) below, it was found that the constituent ratio of the transition metal element to all metal elements (excluding lithium) was 0.0% or more and 15% or less. When the solid electrolyte particles contained the transition metal element, the solid electrolyte particles were easily affected by the potential change of the positive electrode/negative electrode during charging and discharging; therefore, the inventors of the present application also found that the solid electrolyte layer could contain the solid electrolyte particles containing no transition metal element in the composition (the constituent ratio (%) of the transition metal element to all metal elements (excluding lithium): 0.0%). In particular, as shown in Table 1, in Examples 1 to 3, 7 to 9, 15 to 18, 23 to 25, 29 to 30, and 33 to 34, the solid state battery was charged, and the voltage change after resting for 1 hour was less than 0.1 V, which satisfied the standard for more suitably ensuring the insulation properties. Under a situation where such insulating properties were further secured, as shown in Table 2 (the constituent ratio (%) of the transition metal element to all metal elements (excluding lithium)) below, it was found that the constituent ratio of the transition metal element to all metal elements (excluding lithium) was 0.5% or more and 10% or less.

On the other hand, as shown in Table 1, in Examples (corresponding to Comparative Examples) 5, 6, 12 to 14, 20 to 22, 27, 28, 32, and 36, the solid state battery was charged, and the voltage change after resting for 1 hour was 0.2 V or more, which did not satisfy the standard for ensuring the insulation properties. Under a situation where such insulating properties were not secured, as shown in Table 2 below, it was found that the constituent ratio of the transition metal element to all metal elements (excluding lithium) was more than 15%.

From the above, it has been found that when the solid electrolyte layer located between the electrodes is composed of the solid electrolyte particles in which the constituent ratio of the transition metal element is relatively low (15% or less) (that is, the solid electrolyte layer is composed of at least one solid electrolyte particle selected from the group consisting of Examples 1 to 4, 7 to 11, 15 to 19, 23 to 26, 29 to 31, and 33 to 35) or contains the solid electrolyte particles, the reaction (oxidation-reduction reaction) ratio of the transition metal element easily affected by the potential change can be reduced as compared with the case where the solid electrolyte layer located between the electrodes is composed of only the solid electrolyte particles in which the constituent ratio of the transition metal element located between the electrodes is relatively high (more than 15%).

Although one embodiment of the present invention has been described above, those are merely typical examples of the application range of the present invention. Therefore, the present invention is not limited to the embodiment, and those skilled in the art will readily understand that various modifications can be made.

### INDUSTRIAL APPLICABILITY

The solid state battery according to an embodiment of the present invention can be used in various fields in which electricity storage is assumed. Although the followings are merely examples, the solid state battery according to an embodiment of the present invention can be used in electricity, information and communication fields where mobile devices and the like are used (e.g., mobile device fields, such as mobile phones, smart phones, laptop computers, digital cameras, activity meters, arm computers, and electronic papers), domestic and small industrial applications (e.g., the fields such as electric tools, golf carts, domestic robots, caregiving robots, and industrial robots), large industrial applications (e.g., the fields such as forklifts, elevators, and harbor cranes), transportation system fields (e.g., the fields such as hybrid vehicles, electric vehicles, buses, trains, electric assisted bicycles, and two-wheeled electric vehicles), electric power system applications (e.g., the fields such as various power generation systems, load conditioners, smart grids, and home-installation type power storage systems), IoT fields, and space and deep sea applications (e.g., the fields such as spacecraft and research submarines).

### DESCRIPTION OF REFERENCE SYMBOLS

100: Battery constituent unit
10A: Positive electrode layer
10B: Negative electrode layer
20: Solid electrolyte layer
20I₁: Solid electrolyte particle having portion in which constituent ratio of transition metal element is relatively low (0.0% or more and 15% or less)
20II₁: First solid electrolyte particle in which constituent ratio of transition metal element is 15% or less
20II₂: Second solid electrolyte particle in which constituent ratio of transition metal element is more than 15%
20III: Solid electrolyte particle
20III₁: Shell portion
20III₂: Core portion

## Claims

1. A solid state battery comprising, along a stacking direction, at least one battery constituent unit including a positive electrode layer, a negative electrode layer, and a solid electrolyte layer interposed between the positive electrode layer and the negative electrode layer,
wherein at least the solid electrolyte layer includes solid electrolyte particles including a portion in which a constituent ratio of a transition metal element to all metal elements (excluding lithium) is 0.0% or more and 15% or less.

2. The solid state battery according to claim 1, wherein the solid electrolyte particle is an electron conduction path blocking member.

3. The solid state battery according to claim 1 or 2, wherein the solid electrolyte layer is a single layer, and a plurality of the solid electrolyte particles are randomly arranged in the solid electrolyte layer which is the single layer.

4. The solid state battery according to any one of claims 1 to 3, wherein
the solid electrolyte layer includes a first solid electrolyte particle in which the constituent ratio of the transition metal element is 15% or less and a second solid electrolyte particle in which the constituent ratio of the transition metal element is more than 15%, and
the second solid electrolyte particles are interspersed and arranged so as to be separated from each other in a main part of the solid electrolyte layer in which the first solid electrolyte particles are arranged in a matrix form.

5. The solid state battery according to any one of claims 1 to 3, wherein the solid electrolyte particle has a core/shell structure, a core portion is a portion in which the constituent ratio of the transition metal element is more than 15%, and a shell portion is a portion which surrounds the core portion and in which the constituent ratio of the transition metal element is 15% or less.

6. The solid state battery according to any one of claims 1 to 5, wherein at least one of the positive electrode layer and the negative electrode layer further contains the solid electrolyte particle.

7. The solid state battery according to any one of claims 1 to 6, wherein the solid electrolyte particle contains a lithium-containing phosphate compound having a NASICON structure represented by the following Formula 1:
[Formula 1] Li₁₊ₓMi_{2-y}Mii_{y}(PO₄)₃
wherein 0 ≤ x ≤ 1, 0.0 ≤ y ≤ 0.3, Mi is at least one selected from the group consisting of Al, Ga, Ge, Zr, Ca, and In, and Mii is at least one selected from the group consisting of Ti, V, Co, and Fe.

8. The solid state battery according to claim 1, wherein the constituent ratio of the transition metal element is 0.5% or more and 15% or less.

9. The solid state battery according to claim 1, wherein the constituent ratio of the transition metal element is 0.5% or more and 10% or less.

10. The solid state battery according to any one of claims 1 to 9, wherein the positive electrode layer and the negative electrode layer are layers that insert and extract lithium ions.
